**Europäisches Patentamt**

**European Patent Office**

**Office européen des brevets**

(19)

(11) Veröffentlichungsnummer: **0 271 011**
**A2**

## (12) EUROPÄISCHE PATENTANMELDUNG

(21) Anmeldenummer: **87117944.6**

(22) Anmeldetag: **04.12.87**

(51) Int. Cl.4: **A23K 3/03**

(30) Priorität: **10.12.86 DE 3642185**

(43) Veröffentlichungstag der Anmeldung:
**15.06.88 Patentblatt 88/24**

(84) Benannte Vertragsstaaten:
**AT BE CH DE FR GB LI NL SE**

(71) Anmelder: **BASF Aktiengesellschaft**
**Carl-Bosch-Strasse 38**
**D-6700 Ludwigshafen(DE)**

(72) Erfinder: **Luettmer, Jakobus Heinrich, Dr.**
**Rehhuette 5**
**D-6703 Limburgerhof(DE)**
Erfinder: **Witting, Reinert, Dr.**
**Erkenbrechtweg 23d**
**D-6730 Neustadt(DE)**
Erfinder: **Ellenberger, Walter**
**Von-Wissmann-Strasse 5**
**D-6730 Neustadt(DE)**

(54) Mittel zur Konservierung von Grünfutter.

(57) Mittel zur Konservierung von Grünfutter, das 3,5-Dimethyl-1,3,5-tetrahydro-thiadiazinthion-(2) oder Natrium-N-methyl-dithiocarbamat (-dihydrat) und eventuell andere für die Gärfutterbereitung oder Tierernährung förderliche Substanzen wie z.B. Mineralstoffe oder Spurenelemente enthält, sowie Verfahren zur Konservierung von Grünfutter durch Verwendung des Mittels als Zusatz in einer Menge von 0,01 bis 1 %, wobei die Menge auf den Wirkstoffgehalt bezogen ist.

EP 0 271 011 A2

## Mittel zur Konservierung von Grünfutter

Bei der Einsilierung schwer silierbarer Futterpflanzen ist - zur Erzielung eines günstigen Gärverlaufs - die Verwendung von Zusätzen unumgänglich. So werden vor allem bei feuchtem und/oder eiweißreichem Grünfutter in großem Umfang chemische Hilfsmittel zugesetzt. Dabei handelt es sich sowohl um flüssige Mittel, die z.B. organische Monocarbonsäuren, wie Ameisensäure oder Propionsäure enthalten, als auch um Streusalze verschiedenartiger Zusammensetzung. Die Verwendung von Mineralsäuren wie Schwefel-, Salz-oder Phosphorsäure ist aufgrund ernährungsphysiologischer Überlegungen in den letzten Jahren sehr stark zurückgegangen.

Die Aufgabe von Silierhilfsmitteln ist es, die natürliche pH-Absenkung zu Beginn des Gärverlaufs wirkungsvoll zu unterstützen, um für Milchsäurebakterien günstige Wachstumsbedingungen zu schaffen, durch Plasmolyse das Zusammensacken der Futtermassen einzuleiten und dadurch den für die Konservierung schädlichen Sauerstoff zu verdrängen, sowie unerwünschte konkurrierende Tätigkeit von Hefen und Buttersäurebakterien zu unterbinden.

Die Verwendung von Carbonsäuren stößt in der landwirtschaftlichen Praxis häufig auf technische Schwierigkeiten und ist auch, bedingt durch Reizwirkung auf die Schleimhäute und Ätzwirkung, nicht ungefährlich. Bei der Verwendung derzeit bekannter Streusalze, die z.B. aus Al-Formiat, Natriumnitrat und Kochsalz oder Ca-Formiat und Natriumntrit oder Hexamethylentetramin und Natriumnitrit oder -Bisulfit bzw. -Pyrosulfit bestehen, ist bei schwierigen Silierbedingungen der Siliererfolg häufig nicht sicher. Sei es, daß die nötige pH-Absenkung nicht erzielt wird, oder die Wirkung auf die mikrobiellen Vorgänge nicht hinreichend selektiv ist.

Es wurde gefunden, daß an sich bekannte Mittel, wie sie zur Bodenentseuchung verwendet werden, und die 3,5-Dimethyl-1,3,5-tetrahydrothiadiazin-thion-(2) oder Natrium-N-methyl-dithiocarbamat-dihydrat (Kurzbezeichnungen Dazomet bzw. Metam-Sodium) enthalten, die vorstehend genannten Nachteile nicht haben.

Die gärtechnische Wirkung der erfindungsgemäßen Mittel ist derjenigen der handelsüblichen Zusätze meist überlegen. Diese Tatsache erklärt sich hauptsächlich durch die gute selektive Wirkung auf unerwünschte Gärungsschädlinge; es wird angenommen, daß der wirksame Stoff in beiden Fällen das Methylisothiocyanat ist.

Die erfindungsgemäßen Mittel können, je nach Wirkstoffgehalt in Mengen von 0,01 bis 1, bevorzugt 0,05 bis 0,3 Gewichtsprozent dem Grünfutter vor, während oder nach der Einlagerung in Silos zugesetzt werden. Handelsübliche Zubereitungen von Dazomet oder Metam-Sodium sind z.B. 98 bzw. 46 %ig.

Zum Vergleich bekannter und der erfindungsgemäßen Silierhilfsmittel in einem Kleinversuch mit Luzerne wurden verschiedene Produkte auf ihre Eignung als Silierhilfsmittel geprüft. Verwendet wurde dabei Luzerne, 2. Aufwuchs, frisch.

Versuchszeitraum:     Juni bis Dezember
Versuchsmenge:     25 kg/Versuchsglied
Lagerung:     Kunststoffässer, luftdicht verschlossen, Austritt der Gärgase über ein Rückschlagventil
Zahl der Wiederholungen:     n = 3
Zur Beurteilung der Wirkung wurden erfaßt

-TS-Gehalt und Nährstoffgehalt beim Ausgangsmaterial (nach der VDLUFA-Methode); vgl. hierzu das nachstehend angegebene Handbuch
-Nährstoffgehalt bei Versuchsende
-Nährstoffbilanz

Außerdem wurde die sog. Gärqualität nach der im Handbuch "Die chemische Untersuchung von Futtermitteln", Band 3, Kap. 18 (Ausg. 8, Verband Dt. Landw. Untersuchungs-u. Forschungsanstalten) angegebenen Methode ermittelt.

Die Ergebnisse sind in der nachfolgenden Übersicht - aufgeteilt in 3 Tabellen - dargestellt.

Tabelle 1

| Zusatz | TS-Gehalt | Nährstoffgehalte | | | | | | |
| | % | Roh-faser % | Rohprotein % | | Stärkeeinheiten | | NEL/MJ/kg | |
| | | | absolut | Verlust, % | absolut | Verlust, % | absolut | Verlust, % |
| Ausgangsmaterial | 21,8 | 21,9 | 24,3 | – | 576 | – | 5,97 | – |
| Kontrolle | 21,3 | 25,5 | 22,9 | 5,8 | 532 | 7,6 | 5,63 | 5,7 |
| 0,3 % Ameisensäure | 21,4 | 25,9 | 21,9 | 9,9 | 533 | 7,5 | 5,46 | 8,5 |
| 0,1 % Metam-Sodium | 21,4 | 24,7 | 23,2 | 4,5 | 546 | 5,2 | 5,57 | 6,7 |
| 0,3 % Metam-Sodium | 21,6 | 24,5 | 23,4 | 3,7 | 551 | 4,3 | 5,56 | 6,9 |
| 0,1 % Dazomet | 21,3 | 25,7 | 22,6 | 7,0 | 545 | 5,4 | 5.64 | 5,5 |
| 0,3 % Dazomet | 21,3 | 25,6 | 23,6 | 2,9 | 536 | 6,9 | 5,47 | 8,4 |

0 271 011

Tabelle 2

| Zusatz | Trockensubstanz, kg | | | verdauliches Rohprotein, g | | | Stärkeeinheiten | | |
|---|---|---|---|---|---|---|---|---|---|
| | eingela-gerte Menge | ausgela-gerte Menge | Diffe-renz % | eingela-gerte Menge | ausgela-gerte Menge | Diffe-renz % | eingela-gerte Menge | augela-gerte Menge | Diffe-renz % |
| Kontrolle | 16,50 | 15,93 | 3,45 | 4010 | 3648 | 9,03 | 9504 | 8475 | 10,83 |
| 0,3 % Ameisen-säure | 16,92 | 16,39 | 3,13 | 4112 | 3589 | 12,72 | 9746 | 8736 | 10,36 |
| 0,1 % Metam-Sodium | 16,94 | 16,52 | 2,48 | 4116 | 3833 | 6,88 | 9757 | 9020 | 7,55 |
| 0,3 % Metam-Sodium | 17,00 | 16,80 | 1,18 | 4131 | 3931 | 4,84 | 9792 | 9257 | 5,46 |
| 0,1 % Dazomet | 16,90 | 16,40 | 2,96 | 4107 | 3706 | 9,76 | 9734 | 8938 | 8,18 |
| 0,3 % Dazomet | 16,61 | 16,15 | 2,77 | 4036 | 3811 | 5,57 | 9567 | 8656 | 9,52 |

Tabelle 3

| Zusatz | pH-Wert | Gärsäuren | | | Flieg-punkte | Benotung[(+)] |
|---|---|---|---|---|---|---|
| | | Milchsäure % | Essigsäure % | Buttersäure % | | |
| Kontrolle | 5,8 | 0,0 | 0,89 | 0,0 · | 58 | befriedigend |
| 0,3 % Ameisensäure | 5,4 | 0,81 | 0,68 | 0,0 | 66 | gut |
| 0,1 % Metam-Sodium | 5,0 | 0,97 | 0,49 | 0,0 | 81 | sehr gut |
| 0,3 % | 4,8 | 1,13 | 0,41 | 0,0 | 91 | sehr gut |
| 0,1 % Dazomet | 5,5 | 0,91 | 0,66 | 0,0 | 68 | gut |
| 0,3 % Dazomet | 5,4 | 0,91 | 0,60 | 0,0 | 72 | gut |

(+) Benotung:  0 -  20 Punkte = schlecht
              21 -  40 Punkte = mäßig
              41 -  60 Punkte = befriedigend
              61 -  80 Punkte = gut
              81 - 100 Punkte = sehr gut

0 271 011

**Ansprüche**

1. Mittel zur Konservierung von Grünfutter, dadurch gekennzeichnet, daß es 3,5-Dimethyl-1,3,5-tetrahydro-thiadiazinthion-(2) oder Natrium-N-methyl-dithiocarbamat (-dihydrat) enthält.

2. Mittel nach Anspruch 1, dadurch gekennzeichnet, daß es mit anderen für die Gärfutterbereitung oder Tierernährung förderlichen Substanzen wie z.B. Mineralstoffen oder Spurenelementen gemischt wird.

3. Verfahren zur Konservierung von Grünfutter durch Verwendung eines Zusatzes eines Silierhilfsmittels, dadurch gekennzeichnet, daß dem Grünfutter, bezogen auf die Frischmasse, 0,01 bis 1 % eines Mittels nach Anspruch 1 zugesetzt werden, wobei die Menge auf den Wirkstoffgehalt bezogen ist.